(19) Europäisches Patentamt
European Patent Office
Office européen des brevets

(11) **EP 3 064 766 A1**

(12) **EUROPÄISCHE PATENTANMELDUNG**

(43) Veröffentlichungstag:
**07.09.2016 Patentblatt 2016/36**

(51) Int Cl.:
***F02P 23/04*** *(2006.01)*

(21) Anmeldenummer: **15157321.9**

(22) Anmeldetag: **03.03.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **MWI Micro Wave Ignition AG
72186 Empfingen (DE)**

(72) Erfinder:
• **Gallatz, Armin
72186 Empfingen (DE)**

• **Gallatz, Volker
72172 Sulz-Bergfelden (DE)**
• **Möbius, Arnold
28211 Bemen (DE)**
• **Thumm, Manfred, Prof.Dr.
76351 Linkenheim-Hochstetten (DE)**

(74) Vertreter: **Klocke, Peter
ABACUS
Patentanwälte
Lise-Meitner-Strasse 21
72202 Nagold (DE)**

Bemerkungen:
Geänderte Patentansprüche gemäss Regel 137(2) EPÜ.

(54) **Verfahren und Vorrichtung zum Einbringen von Mikrowellenenergie in einen Brennraum eines Verbrennungsmotors**

(57) Verfahren zum Einbringen von Mikrowellenenergie in einen Brennraum eines Verbrennungsmotors bei dem die Mikrowellen über ein Mikrowellenfenster in den Brennraum gelangen, wobei die Mikrowellen nach dem Durchtritt durch das Mikrowellenfenster am Umfang des Brennraumes geführt und radial in den Brennraum eingekoppelt werden. Entsprechend ist bei der Vorrichtung zum Einbringen von Mikrowellenenergie in einen Brennraum eines Hubkolben-Verbrennungsmotors mit wenigstens einem Zylinder mit Zylinderkopf und Brennraum in dem Zylinderkopf mindestens ein um den Brennraum am Umfang verlaufender Hohlleiterringraum mit mindestens einer Zuführung für die Mikrowelle und mit mindestens einer zwischen Hohlleiterringraum und Brennraum angeordneten Austrittsöffnung für die Mikrowelle angeordnet ist. Ein Verbrennungsmotor weist die Merkmale der Vorrichtung auf. Das Verfahren und die Vorrichtung erlauben eine genaue Steuerung des Beginns einer Raumzündung eines Kraftstoff-LuftGemisches in einem Brennraum, so dass eine optimale schadstoffarme Verbrennung des Kraftstoffes mit einem gegenüber herkömmlichen Hubkolben-Verbrennungsmotoren erhöhten Wirkungsgrad erreicht wird. Generell ermöglicht die Erfindung die sichere Zündung von mageren Kraftstoff-Luft-Gemische.

Fig. 1B

**EP 3 064 766 A1**

**Beschreibung**

Die Erfindung betrifft ein Verfahren zum Einbringen von Mikrowellenenergie in einen Brennraum eines Verbrennungsmotors und eine Vorrichtung zum Einbringen von Mikrowellenenergie in einen Brennraum eines Hubkolben-Verbrennungsmotors mit wenigstens einem Zylinder mit Zylinderkopf und Brennraum bei dem die Mikrowellen über ein Mikrowellenfenster in den Brennraum gelangen. Die Erfindung betrifft auch einen Verbrennungsmotor mit einer derartigen Vorrichtung.

Aus der DE 103 56 916 A1 ist bekannt, in einem Brennraum mittels Mikrowellenenergie einer Raumzündung in einem Verbrennungsmotor zu erzeugen, um damit die Verbrennung des über ein Kraftstoff-Luft-Gemisches eingebrachten Kraftstoffs besser zu zünden und zu verbrennen.

Bei herkömmlichen Motoren wird ein zündfähiges Gemisch in einem kegelförmigen Zylinderkopf komprimiert und durch eine Zündkerze zur Reaktion/Oxidation gebracht. Dabei breitet sich die chemische Oxidation kugelförmig von dem Ort der Zündung in Form einer Druck- und Reaktionsfront (Laminare Brenngangsphase) aus. Die Druckfront bewegt sich schneller als die Reaktionsfront und erreicht deshalb als erste den Zylinderrand. An diesem wird sie reflektiert und läuft der Reaktionsfront entgegen. Treffen sich beide Fronten, kann die Reaktion zum Erliegen kommen, was Wirkungsgradverluste und Schadstoffe zur Folge hat.

Abhilfe schafft das Ersetzen der lokalen Zündung durch eine Raumzündung mittels Mikrowellen. Vor dem Zünden soll das Gemisch möglichst homogen über das gesamte Volumen angeregt werden, was eine über den Brennraum verteilte Absorption erfordert. Dabei spielt die Absorptionsfähigkeit von Mikrowellen, beschrieben durch einen Materialparameter $\tan\delta(t)$ und die damit verbundene Eindringtiefe eine wesentliche Rolle.

Bei der Kompression erfolgt bereits eine druck- und temperaturabhängige Ionisation des Zündgemisches. Auf Grund dieser Ionisierung bestimmter Treibstoffmoleküle ist grundsätzlich von Absorptionsraten der Mikrowellen durch das zündfähige Gemisch im Brennraum auszugehen, die sich jedoch während des Kompressionsvorgangs zeitlich ändern dürfte.

Da die beschriebene Homogenität in der Praxis niemals vollständig erreicht werden kann, soll die Reaktionsfront von außen nach innen laufen. Es ist demnach eine Mikrowelleneinspeisung zu finden, die im kreiszylindrischen Brennraum eine Feldverteilung generiert, die längs des gesamten Umfangs homogen und längs des Radius möglichst homogen oder bevorzugt monoton bei größeren Radien zunimmt. Die Homogenität der Feldverteilung soll vom Absorptionsverhalten des Gemischs so schwach wie möglich abhängig sein.

Der Erfindung liegt folglich die Aufgabe zu Grunde, eine möglichst homogene, Zündverteilung im gesamten Brennraum zu erreichen bzw. lokale Zündkeime zumindest am Randbereich des Brennraums zu erzeugen.

Diese Aufgabe wird erfindungsgemäß durch ein Verfahren nach Anspruch 1 und eine Vorrichtung nach dem Anspruch 9 sowie einen Verbrennungsmotor nach Anspruch 15 gelöst. Weiter vorteilhafte Ausgestaltungen sind den jeweiligen rückbezogenen Unteransprüchen zu entnehmen.

Danach werden bei dem erfindungsgemäßen Verfahren die Mikrowellen nach dem Durchtritt durch das Mikrowellenfenster am Umfang des Brennraumes geführt und radial in den Brennraum eingekoppelt. Mit dem Mikrowellenfenster wird der Brennraum nach außen verschlossen und dient damit der Abdichtung und erlaubt gleichzeitig die Einkopplung der Mikrowellen. Das Mikrowellenfenster kann beispielsweise aus einem keramisches Material, vorzugsweise mit einer Reinheit >99% oder ein anderer fester für Mikrowellen durchlässiger Werkstoff sein, um die Mikrowellen möglichst wenig zu beinträchtigen. Hierfür ist auch beispielsweise Saphirglas oder Quarzglas verwendbar. Die Mikrowellen können dabei in nur einer Ebene oder auch in verschiedenen Ebenen gegenläufig oder gleichlaufend um den Brennraum geführt und in diesen über die Brennraumwand eingekoppelt werden.

Vorzugsweise werden die Mikrowellen über mindestens einen am Umfang des Brennraumes angeordneten Hohlleiterringraum mit mindestens einer zu dem Brennraum gerichteten Austrittsöffnung in den Brennraum eingeleitet. Die Mikrowellen werden dazu in einem für die optimalen Wellenleitung unter Vermeidung von Modensprüngen und Reflektionen in einem Hohlleiterringraum geführt, dessen Querschnitt rechteckig mit der speziellen Variante quadratisch, rund oder oval ausgebildet werden kann. Vorzugsweise ist der Querschnitt quadratisch, um Überschlage im Hohlleiterringraum zu vermeiden. Der Hohlleiterringraum wird direkt angrenzend an die Brennraumwand angeordnet, so dass die Mikrowellen, die durch mindestens eine Austrittsöffnung in dem Hohlleiteringraum radial in Richtung Brennraumwand austreten, direkt in den Brennraum eingekoppelt werden. Die mindestens eine Austrittsöffnung kann dabei sich über den ganzen Umfang des Brennraumes oder auch nur über Teilbereiche erstrecken.

Zweckmäßigerweise werden die Mikrowellen am Ende des Hohlleiterringraumes unter einem Winkel in den Brennraum geleitet, um Reflektionen der bereits um den Brennraum gelaufenen Mikrowellen am Ende des Hohlleiteringraums zurück zu einer Mikrowellenquelle zu vermeiden oder zumindest weitgehend abzuschwächen.

Bevorzugt werden die Mikrowellen von dem Hohlleiterringraum durch einen zwischen Hohlleiterringraum und Brennraum umlaufenden Spalt, durch einen zwischen Hohlleiterringraum und Brennraum umlaufenden, sich mit der Länge des Weges der Mikrowelle im Hohlleiterringraum vergrößernden Spalt oder über eine Vielzahl von, vorzugsweise sich mit der Länge des Weges der Mikrowelle im Hohlleiterringraum vergrößernde, senkrecht zur Fortpflanzungsrichtung der Mikrowelle zwischen Hohlleiterringraum und Brennraum angeordnete Spalte oder einer Kombination daraus eingeleitet werden. Diese Maßnahmen dienen dazu, Mikrowellenenergie in ausreichender Menge an möglichst vielen Stellen in dem Brennraum zukonzentrieren, um dort durch eine Vielzahl von Zündkeimen eine Raumzündung in dem Brennraum zu erzeugen.

Zweckmäßigerweise werden die Mikrowellen mit einer Frequenz von 25 GHz bis 90 GHz, vorzugsweise 36 GHz, eingeleitet, da es sich gezeigt hat, dass bei diesen Frequenzen die gewünschte Raumzündung in dem Brennraum erfolgt.

Weiter vorteilhaft ist, wenn die Mikrowellen in Impulspaketen eingeleitet werden, wobei vorzugsweise die Impulspakete auch nach einer bereits erfolgten Zündung eines Kraftstoff-Luft-Gemisches aufrechterhalten werden. Damit wird die Zündung des Kraftstoff-Luft-Gemisches optimiert und auch bereits erfolgter Zündung und sich möglicherweise schon vergrößerndem Brennraum weiter die Verbrennung des Kraftstoff-Luft-Gemisches angeregt.

Ein besonderer Vorteil des Verfahrens liegt darin, dass die Mikrowellen bezüglich einer Kurbelwelle winkelgradgesteuert eingeleitet werden, so dass eine genaue Steuerung der Zündung durchgeführt werden kann.

Bei einem Hubkolben-Verbrennungsmotor mit wenigstens einem Zylinder mit Zylinderkopf werden zweckmäßigerweise die Mikrowellen über einen im Zylinderkopf um den Brennraum angeordneten Hohlleiterringraum eingeleitet.

Bei der erfindungsgemäßen Vorrichtung zum Einbringen von Mikrowellenenergie in einen Brennraum eines Hubkolben-Verbrennungsmotors mit wenigstens einem Zylinder mit Zylinderkopf bei dem die Mikrowellen über ein Mikrowellenfenster in den Brennraum gelangen, weist der Zylinderkopf mindestens einen um den Brennraum am Umfang verlaufender Hohlleiterringraum mit mindestens einer Zuführung für die Mikrowelle und mindestens eine zwischen Hohlleiterringraum und Brennraum angeordnete Austrittsöffnung für die auf.

Vorteilhafterweise ist zur Vermeidung der Reflektionen am Ende des Hohlleiterringraumes eine unter einem Winkel zu dem Hohlleiterringraum angeordnete Wand und eine Austrittsöffnung in Richtung Brennraumwand angeordnet.

Die Vorrichtung weist Vorteilhafterweise zwischen Hohlleiterringraum und Brennraum ein umlaufender Spalt, ein zwischen Hohlleiterringraum und Brennraum umlaufenden, sich mit der Länge des Weges der Mikrowelle im Hohlleiterringraum vergrößernder Spalt oder eine Vielzahl von, vorzugsweise sich mit der Länge des Weges der Mikrowelle im Hohlleiterringraum vergrößernde, senkrecht zur Fortpflanzungsrichtung der Mikrowelle zwischen Hohlleiterringraum und Brennraum angeordnete Spalte oder einer Kombination daraus auf.

Zum konstruktiven kostengünstigen Aufbau der erfindungsgemäßen Vorrichtung ist der Hohlleiterringraum als ein um den Brennraum verlaufender Kanal mit einem auf dem Kanal auflegbaren Ring zur Bildung des Hohlleiters ausgebildet. Durch den Ring wird der Kanal auf der offenen Seite auf einfache Weise abgedeckt und die Herstellung vereinfacht. Vorzugsweise kann der Ring in den Brennraum hineinragende Spitzen aufweisen, so dass durch lokale Feldüberhöhungen an diesen Stellen verstärk Zündungen ausgelöst werden.

Dieser Ring zeigt sich als besonders vorteilhaft, wenn gemäß einer weiteren erfindungsgemäßen Ausbildung der Vorrichtung ein weiterer, vorzugsweise identischer, Hohlleiterringraum im Anschluss an den anderen Hohlleiterringraum vorgesehen ist, der vorzugsweise mit den Austrittsöffnungen gegenüber den Austrittsöffnungen des anderen Hohlleiteringraumes versetzt angeordnet ist und vorzugsweise der weitere Hohlleiterringraum in einem ringförmigen Werkstück angeordnet ist, das im Anschluss an den anderen Hohlleiterringraum mit dem Hohlleiterringraum entgegengesetzt angeordnet ist. Dann kann zwischen Werkstück und dem anderen Hohlleiterringraum ein ringförmiges Trennblech angeordnet werden, das die Trennwand zwischen den Hohlleiterringräumen bildet und gleichzeitig bei beiden Hohlleiterringräumen eine Wand bildet. Zum einen wird durch diese Ausgestaltung es ermöglicht, gegenläufig Mikrowellen in den die Hohlleiterringräume einzuleiten und zum anderen diese auch durch versetzte Anordnung der Austrittsöffnungen in den Brennraum einzukoppeln, um möglichst viele Zündkeime zur Bildung einer Raumzünden zu erzeugen.

Auch können in dem Brennraum, insbesondere im Zylinderkopf noch zusätzlich Spitzen zur lokalen Feldüberhöhung und Erzeugung von Zündkeimen vorgesehen sein. Sofern erforderlich kann auch mindestens eine zusätzliche Mikrowellenzündkerze gemäß der parallelen Anmeldung EP 15157298.9 in dem Zylinderkopf angeordnet sein.

Der erfindungsgemäße Verbrennungsmotor ist als Hubkolben-Verbrennungsmotor ausgebildet und weist eine vorstehend beschriebene Vorrichtung mit einer der Ausführungsvarianten auf.

Der mathematischen Beschreibung liegt ein Zylinderkoordinatensystem $r$, $\varphi$, $z$ zu Grunde. In einem kreiszylindrischen elektrisch leitfähig abgegrenzten Raum gehorcht die Verteilung der elektromagnetischen Wellen längs des Umfangs Sinus- bzw. Cosinusfunktionen und längs des Radius Zylinderfunktionen, auch Besselfunktionen genannt. Je nach Orientierung der Feldlinien werden die zugehörigen Eigenmoden $TE_{mn}$ bzw $TM_{mn}$ Moden genannt. Dabei entspricht der erste Index $m$ der Anzahl der azimutalen, der zweite Index $n$ der Anzahl der radialen Maxima. Moden mit hohem azimutalem und niedrigem radialem Index werden Whispering Gallery Moden (WGM) genannt. Ihre Leistung oszilliert im Wesentlichen am Rand des Hohlzylinders. Mit steigendem radialem Index verlagert sich die oszillierende Leistung ins Innere des Brennraums.

Die Überlagerung zweier um $\pi/(2m)$ azimutal

und zeitlich versetzter sonst gleicher Moden führt zu einer rotierenden Mode. Diese sind in der Literatur durchaus bekannt. Mathematisch drückt man eine azimutal stehende Mode durch zwei gegeneinander rotierende Moden aus durch die Gleichung:

$$2\,cos m\varphi\, e^{-i\omega t} = \left(e^{im\varphi} + e^{-im\varphi}\right)e^{-i\omega t}$$

Für den Fall m = 0 hat man eine azimutal konstante Verteilung.

Ähnliches gilt in radialer Richtung: Die radial stehende Wellen beschreibende Besselfunktion kann in ein- und auswärts propagierende Hankelfunktionen zerlegt werden:

$$2J_m(k_r r) = H_{m2}(k_r r) + H_{m1}(k_r r)$$

wobei kr die radial Wellenzahl ist. Eine Feldverteilung proportional zu

$$e^{im\varphi} * \ H_{m2}(k_r r)$$

beschreibt eine Mode deren Leistung spiralförmig nach innen propagiert. Die zugehörigen Phasenfronten werden dabei mit sinkendem Radius immer steiler.

Erfindungsgemäß wird eine längs des Umfangs möglichst homogene Zündung, wahlweise im Außenbereich des Zylinders, oder im ganzen Volumen dadurch erreicht, dass entweder gezielt eine rotierende Whispering Gallery Mode oder eine Volumenmode im Brennraum angeregt wird. Dazu wird ein Speisewellenleiter, vorzugsweise Rechteckwellenleiter, in Form des Hohlleiterringraumes um den Brennraum gewunden. Aus der Theorie ist bekannt, dass die Hohlleiterwellenlänge seiner Moden durch die transversalen geometrischen Abmessungen verändert werden kann. Der Speisewellenleiter und der zylindrische Brennraum werden daher in einer Ausführungsform durch periodische Öffnungen über die als Mikrowellenfenster wirkenden Brennraumwand miteinander verbunden, wodurch Leistung vom Wellenleiter in den Brennraum gekoppelt wird. Wird nun die Periode p der Öffnungen so gewählt, dass

$$p = \frac{2 * \pi}{k_l}$$

wobei $k_l$ die axiale Wellenzahl der Mode im gewundenen Wellenleiter ist, so wird gezielt eine $TE_{0n}$ Mode im Brennraum angeregt. Diese hätte im Idealfall kreisförmig nach innen laufende Phasenfronten mit konstanter Amplitude. Die eingespeiste Leistung erreicht auf direktem Weg die gegenüber liegende Wand und kann dort bereits in den gewundenen Speisewellenleiter zurück gekoppelt werden. Die zurückgelegte Weglänge im Brennraum entspricht somit dessen Durchmesser. Bei schlechter Absorption des Zündgemischs wird ein beachtlicher Teil der Leistung in den Speisewellenleiter zurück gekoppelt und zur Mikrowellenquelle reflektiert.

Aus diesem Grund wird erfindungsgemäß alternativ eine leicht abweichende Periode der Öffnungen gewählt. Dadurch werden die Phasenfronten geneigt. Die Leistung propagiert spiralförmig in den Brennraum, was eine hohe Weglänge und damit eine von tan δ weitgehend unabhängige Absorption der Mikrowellenleistung ermöglicht. Die Breite der Öffnungen wird so variiert, dass die in den Brennraum eingekoppelte Leistung längs des Umfangs konstant ist.

Wie bereits beschrieben, neigen sich die Flächen konstanter Phase umso stärker zum Radius je kleiner der Radius wird. Es gibt einen Radius, bei dem die Leistung nur noch in azimutaler Richtung propagiert. Das führt zu einen feldfreien Bereich im Inneren des Brennraums. Dieser ist dann vorteilhaft, wenn in der Mitte des Brennraums die Brennstoffkonzentration gering ist. Die angeregten Moden entsprechen den bereits erwähnten Whispering Gallery Moden. Diese Kopplung wird besonders effizient erreicht, wenn die Wellenlänge im gewundenen Wellenleiter gegenüber der Freiraumwellenlänge verkürzt wird. Dazu wird der Wellenleiter mit einem nicht absorbierenden Dielektrikum gefüllt.

Auf dem Weg von der Quelle zum Brennraum müssen die Mikrowellen als Druckbarrieren ausgestaltete Fenster überwinden. Das Dielektrikum im gewundenen / gekrümmten Wellenleiter kann erfindungsgemäß als Mikrowellenfenster dienen.

Es könnte sich als vorteilhaft erweisen, die Zündung an der Hohlleiterwand zu forcieren. Aus der Theorie elektromagnetischer Wellen ist bekannt, dass sich in eingebrachten Dielektrika resonante Feldüberhöhungen ausbilden können. Dies kann beispielsweise mittels einem Ring, hier "Zündring" genannt, und die lokale resonante Feldüberhöhung, die auch in den Brennraum hineinreicht und dort die Zündung forciert.

Erfindungsgemäß können die Zündringe zusätzlich die Funktion des Fensters übernehmen. Sollen diese Ringe nur als Fenster ohne Zündfunktion dienen, werden sie zweckmäßig entweder im Raum außerhalb der Stege angebracht, Dann ergibt sich keine Feldüberhöhung am Rand.

Es lassen sich starke Feldüberhöhungen am Rand bei gleichzeitiger vergleichsweise schwächerer Anregung des Feldes in der Mitte erzielen, indem die die Periode der Einkopplung derart gewählt wird, dass eine Kopplung sowohl in eine Volumenmode als auch eine WGM stattfindet. Es ergibt sich dadurch eine Feldüberhöhung an den Randbereichen.

Die Anregung der Felder am Rand des Brennraums lässt sich auch zeitlich steuern. Zunächst wird eine Frequenz gewählt, bei der vom Speisewellenleiter in die den gesamten Brennraum anregende Volumenmode gekoppelt wird. Die Frequenz kann anschließend so geändert werden, dass in eine zündende WGM eingekoppelt wird.

An Ende des gewunden Wellenleiters kann eine die Polarisation drehende 45 Grad geneigte Platte angebracht werden. Die das Ende des gewundenen Leiters erreichende Mikrowellenleistung wird dann in einer gedrehten Polarisation reflektiert. Die in der 90° gedrehten Polarisation in den Brennraum eingekoppelte Leistung interferiert dann nicht mit der in Vorwärtsrichtung eingekoppelten Leistung.

In einigen Fällen kann es erforderlich sein, die Zündung lokal an der Schräge des Zylinderkopfes zu forcieren. Aus der Theorie elektromagnetischer Wellen ist bekannt, dass lokale Feldüberhöhungen bevorzugt an leitfähigen Spitzen auftreten. Bringt man diese an diversen Stellen im Motorraum (Zylinderkopf) an, werden lokale Feldüberhöhungen und damit eine lokale Zündungen erzielt.

Das Verfahren und die Vorrichtung ermöglichen somit die genaue Steuerung des Beginns einer Raumzündung eines Kraftstoff-Luft-Gemisches in einem Brennraum, so dass eine optimale schadstoffarme Verbrennung des Kraftstoffes mit einem gegenüber herkömmlichen Hubkolben-Verbrennungsmotoren erhöhten Wirkungsgrad erreicht wird. Generell ermöglicht die Erfindung die sichere Zündung von mageren Kraftstoff-Luft-Gemische, was eine zusätzliche Anreicherung zum Zünden nicht erforderlich macht und zu einem geringeren Treibstoffverbrauch führt. Schadstoffe und deren Entstehung können durch die Verbrennungstemperatur und durch das Mischungsverhältnis von Luft und Treibstoff geregelt werden. Die Verbrennung gemäß der Erfindung läuft schneller ab als bei herkömmlichen Zündungen. Dies hat eine "kältere" Verbrennung zur Folge, so dass der Wirkungsgrad steigt. Weiterhin sind prinzipiell bei kälteren Verbrennungsabläufen geringere Schadstoffemissionen erzielbar. Durch die kältere Verbrennung wird die Konzentration von NO in den Abgasen reduziert. Durch die Raumzündung Ist der Brennvorgang im Unterschied zur herkömmlichen Verbrennung deutlich weniger auf den Brennfortschritt in Form von Diffusionsflammen angewiesen. Damit werden weitere Wärmeverluste vermieden und eine Effizienzsteigerung erreicht. Eine Aufheizphase des Brennraums und der Luft im Oxidationsbereich ist bei der dieser Verbrennung nicht gegeben.

Nachfolgend wird die Erfindung anhand schematischer Übersichtsskizzen näher erläutert. Weitere Merkmale der Erfindung ergeben sich aus der folgenden Beschreibung der Erfindung in Verbindung mit den Ansprüchen und der beigefügten Zeichnung. Es zeigen:

Figur 1    zeigt einen Zylinderkopf mit einer Ringeinkopplung mit einem konstanten Schlitz in einer perspektivischen Ansicht (Figur 1A), in einer Draufsicht (Figur 1B) und in einer Schnittdarstellung (Figur 1 C);

Figur 2    einen Zylinderkopf mit einer Ringeinkopplung mit einem sich über die Wegstrecke vergrößernden Ringspalt in den Brennraum in einer perspektivischen Ansicht (Figur 2A), einer Draufsicht (Figur 2B) und einer Schnittdarstellung (Figur 2C);

Figur 3    einen Zylinderkopf mit einer Ringeinkopplung mit einer Vielzahl von Öffnungen in den Brennraum in einer perspektivischen Ansicht (Figur 3A), in einer Draufsicht (Figur 3B) und in ersten Schnittdarstellung (Figur 3C) und einer zweiten Schnittdarstellung (Figur 3D) um 90° versetzt zu der ersten Schnittdarstellung, wobei die Schnittdarstellungen auch eine Ausschnitt eines Verbrennungsmotors zeigen;

Figur 4    ein Gegenstück für eine Ringeinkopplung gemäß Figur 3 in perspektivischer Ansicht (Figur 4A), in einer Draufsicht (Figur 4B), in einer Schnittdarstellung entlang der Linie A-A (Figur 4C) und in einer Schnittdarstellung entlang der Linie B-B (Figur 4B);

Figur 5    einen Zylinderkopf gemäß Figur 2 bei dem ein Hohlleiterringraum mit sich vergrössernder Öffnung durch einen eingelegten Abdeckring gebildet wird in perspektivischer Ansicht (Figur 5A), in Draufsicht (Figur 5B) und in einer Schnittdarstellung (Figur 5C);

Figur 6    ein Abdeckring zur Bildung eines Hohlleiterringraumes mit zusätzlichen Spitzen in einer perspektivischen Ansicht (Figur 6A) und in einer Draufsicht (Figur 6B);

Figur 7    einen Zylinderkopf gemäß den Figuren 3 und 4 im Zusammenbau in einer perspektivischen Ansicht (Figur 7a), in einer Draufsicht (Figur B), in einer Schnittdarstellung entlang der Linie A-A (Figur 7D) und in einer Schnittdarstellung entlang der Linie B-B (Figur 7D); und

Figur 8    einen Querschnitt durch einen Ausschnitt eines Verbrennungsmotors mit einem Zylinder mit einer Ringeinkopplung in der Ausgestaltung gemäß Figur 3.

In den nachfolgend beschriebenen Figuren wird die Erfindung anhand von verschiedenen Ausbildungen von Zylinderköpfen beispielhaft dargestellt. Sämtliche in den einzelnen Figuren enthaltenen gleichen Elemente sind in allen Figuren mit gleichen Bezugszeichen versehen.

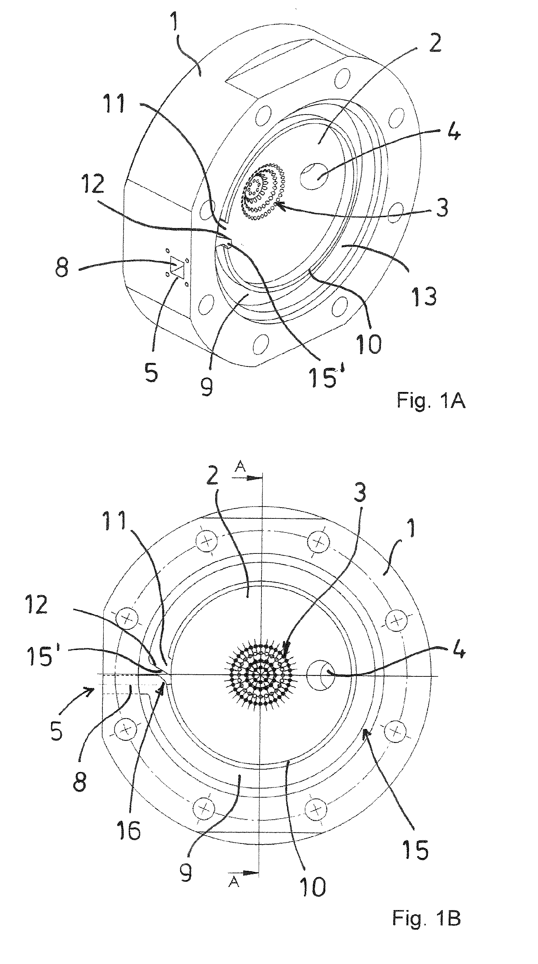

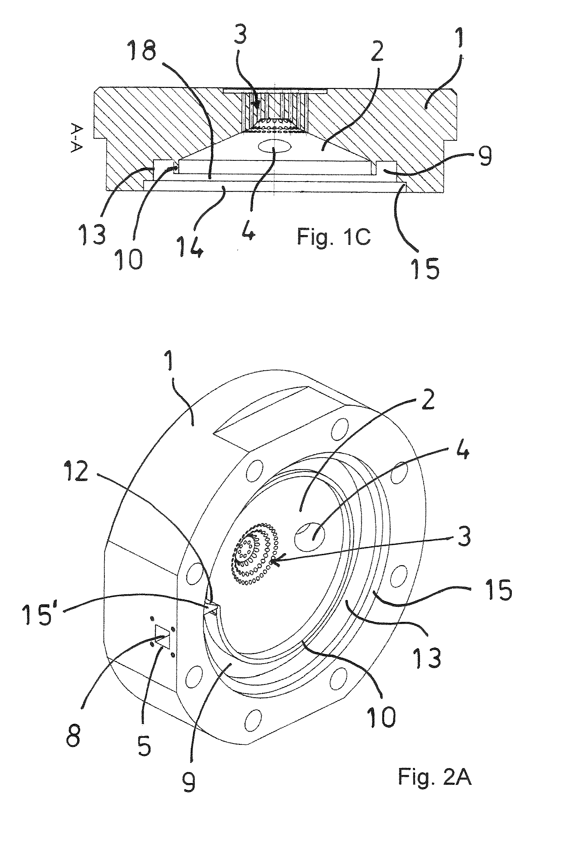

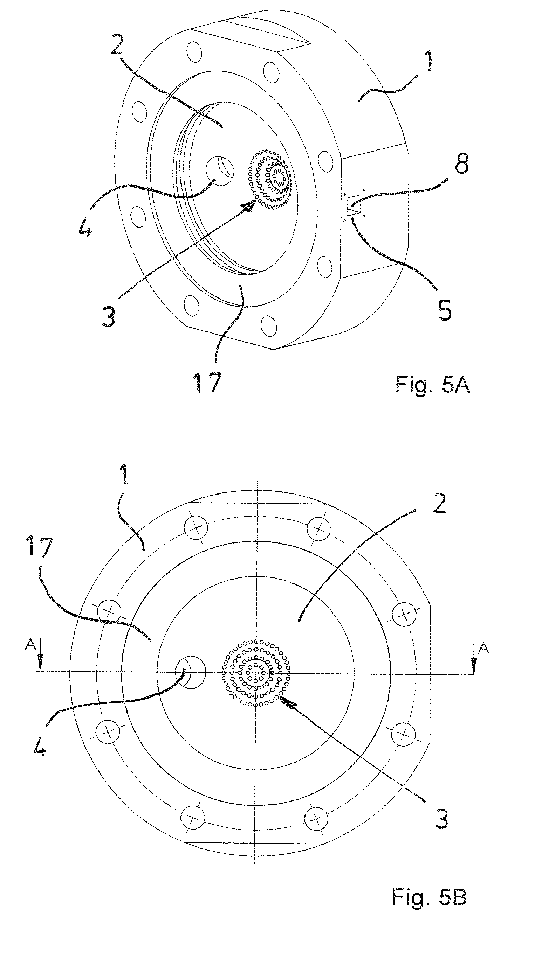

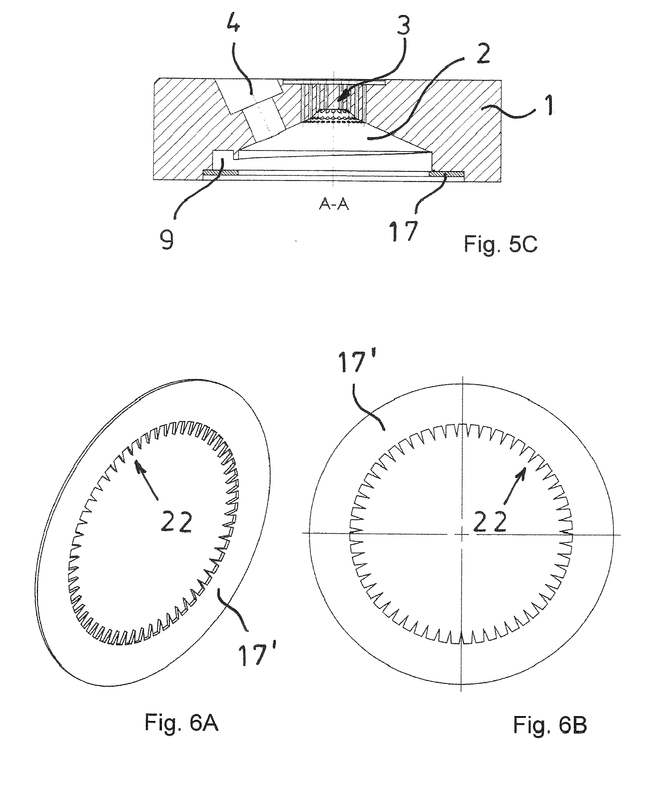

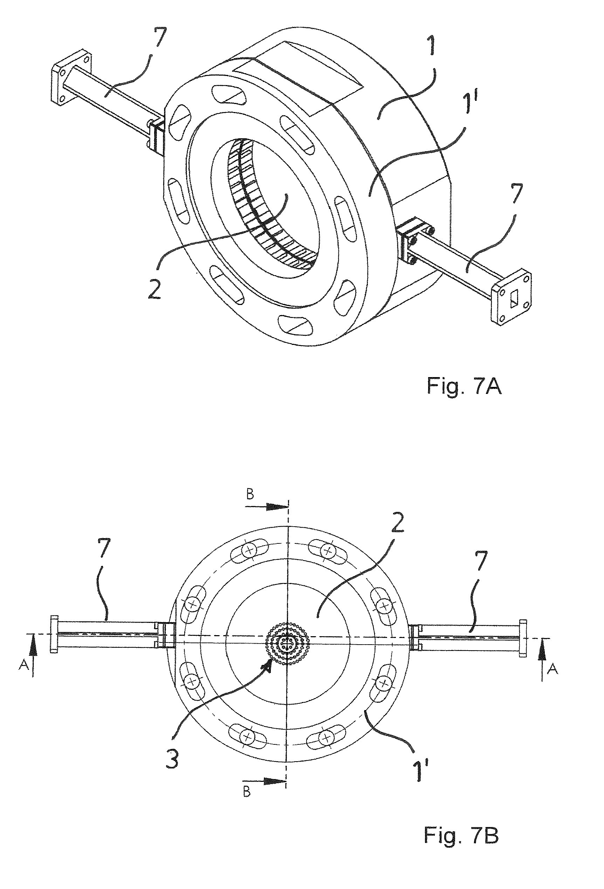

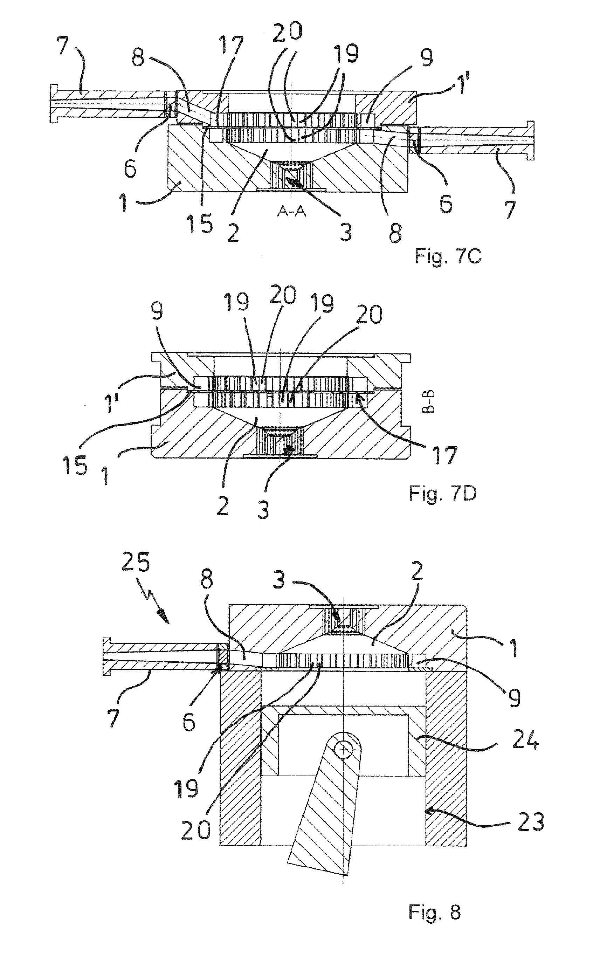

Figur 1A zeigt in der perspektivischen Ansicht einen Zylinderkopf 1 aus Metall, der einen gewölbten Brennraum 2 aufweist. In den Brennraum 2 führen bei diesem Ausführungsbeispiel eine Vielzahl von Bohrungen 3, die im Zentrum des Brennraumes 2 angeordnet sind und über die ein Kraftstoff-Luft-Gemisch eingebracht werden kann. Die Abführung der Abgase erfolgt einer bei derartigen Motoren üblichen Art und Weise. Selbstverständlich kann hier auch in üblicher Art und Weise ein Einlass- oder Auslassventil im Zylinderkopf 1 angeordnet sein. Zusätzlich ist in diesem Ausführungsbeispiel eine weitere Bohrung 4 vorgesehen, in die zusätzlich noch eine Zündkerze eingefügt werden kann, sofern dies erforderlich sein sollte. Bei ausreichender Zuführung von Mikrowellenenergie und entsprechend gewünschter Raumzündung in dem Brennraum 2 kann diese Bohrung auch weggelassen werden. Der Zylinderkopf 1 weist an seinem Umfang eine Öffnung 5 auf, in der oder vor der ein beispielhaft in Figur 7 dargestelltes Mikrowellenfenster 6 angeordnet wird, um den Brennraum 2 von dem außerhalb des Zylinders befindlichen Raum zu trennen, damit keine Gase über diesen Weg zurück in eine in Figur 7 dargestellte Mikrowellenzuführung gelangen können. Die Öffnung 5 ist das eine Ende eines Hohlraumes 8, der in einen Ringraum 9 mündet, welcher um den Brennraum 2 verläuft. Der Ringraum 9 ist in dem Zylinderkopf 1, wie aus den Figuren ersichtlich, als Kanal ausgebildet, der durch einen später erläuterten Ring 17, 17' (Figuren 5 und 6) zu einem Hohleiterringraum wird. Daher wird dieser bei der offenen Darstellung als Ringraum 9 und in der geschlossenen Darstellung als Hohlleiterringraum 9 bezeichnet. Ein um den Brennraum 2 umlaufender Steg 10 bildet die Wand des Ringraumes 9 zum Brennraum 2. Der Steg 10 weist am Ende des Ringraumes 9 eine Öffnung 11 auf, die den Ringraum 9 mit dem Brennraum 2 verbindet. Zusätzlich ist die am Ende befindliche Stirnwand 12 des Ringraumes 9 schräg ausgebildet, so dass die in dem Ringraum 9 verlaufende Mikrowellen unter einem Winkel auf diese Stellwand 12 treffen und somit nicht oder nur in einem geringen Maße durch den Ringraum 9 zurück reflektiert werden. Stattdessen kann die durch den Ringraum 9 laufende Mikrowelle über die Öffnung 11 in den Brennraum entweichen. In dem in Figur 1 dargestellten Ausführungsbeispiel weist der wandbildende Steg 10 durchgängig eine gleiche Höhe auf, die niedriger ist als die Umfangsaußenwand 13 um den kanalförmigen Ringraum 9. Wie insbesondere aus der Figur 1C ersichtlich, liegt der Ringraum 9 in einer größeren Ausnehmung 14 in dem Zylinderkopf 1, so dass dadurch ein umlaufender Absatz 15 gebildet wird, der sich auch in den Bereich 15' erstreckt, der zwischen der Stirnwand 12 und einer die Mikrowellen nach dem Eintritt in den Ringraum 9 umlenkenden Umlenkwand 16 liegt. Um einen Hohlleiterringraum zu bilden, wird der Ringraum 9 mittels eines flächigen Ringes 17 (Figur 5) abgedeckt. Durch diesen und der Oberkante des wandbildenden umlaufenden Steges 10 entsteht ein Spalt, über den die Mikrowellen während Ihres Umlaufes durch den Hohlleiterringraum 9 in den Brennraum 2 gelangen können. Dieser Bereich ist in der Figur 1C mit der Ziffer 18 gekennzeichnet.

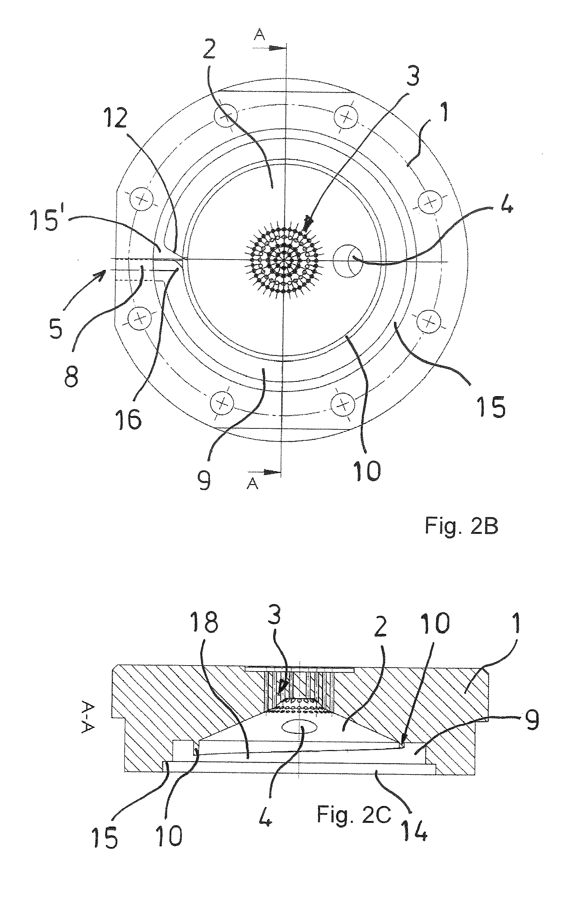

Die Figur 2 entspricht der Figur 1 mit dem Unterschied, dass der wandbildende Steg 10 durchgängig ist, d. h. am Ende in der Nähe der Stirnwand 12 keine gesonderte Öffnung vorhanden ist. Dafür nimmt der Steg in seiner Höhe vom Beginn des Ringraumes 9 an der Umlenkwand 16 bis zum Ende an der Stirnwand (12) kontinuierlich ab. Auch hier wird der Hohlleiterringraum 9 durch einen flächigen Ring (17, 17'), wie in Figur 5 bzw. in Figur 6 dargestellt, gebildet.

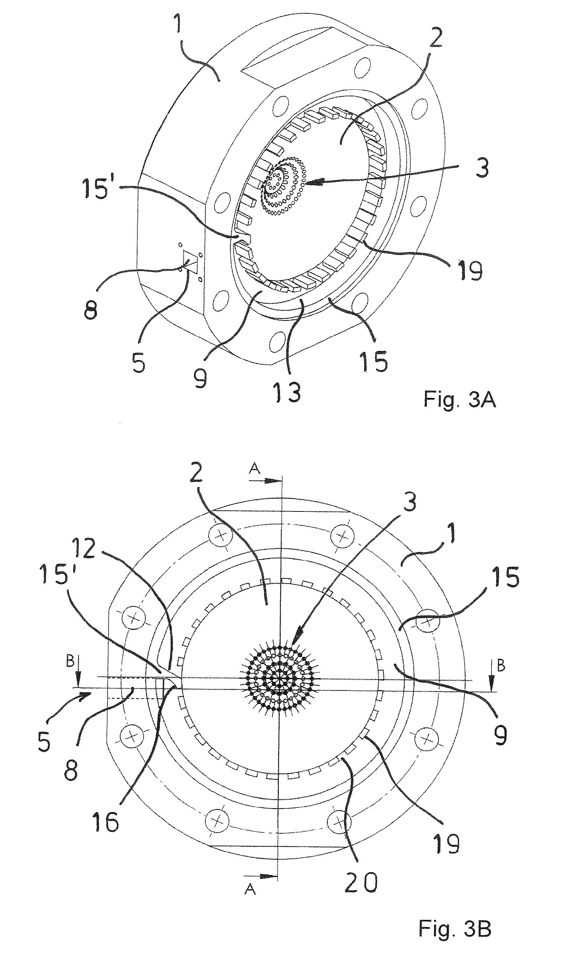

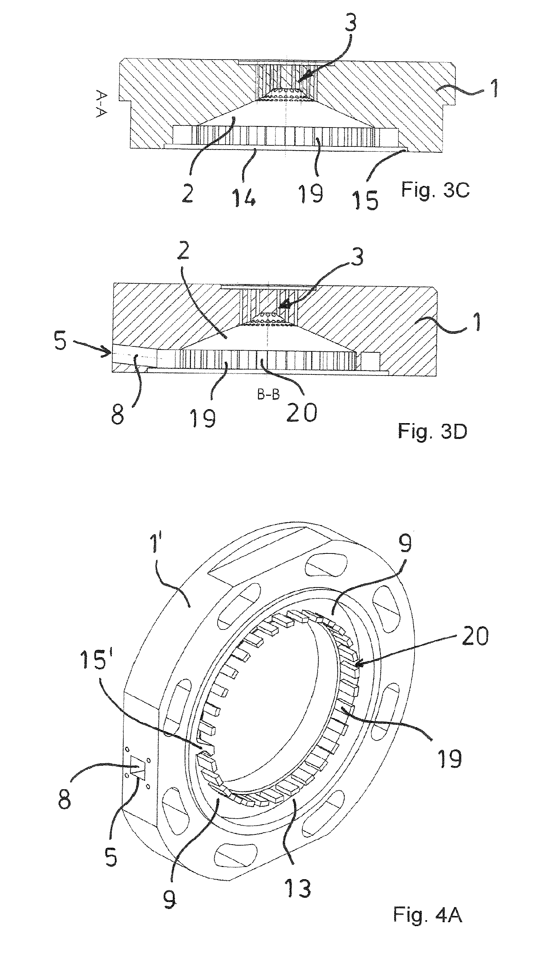

In der Ausführungsform gemäß Figur 3 werden anstelle eines wandbildenden Steges eine Vielzahl von Einzelstegen 19 mit dazwischen befindlichen Austrittsöffnungen 20 vorgesehen. In dem Ausführungsbespiel weisen die Einzelstege 19 eine gleichbleibende Höhe und gleichen Abstand auf. Dieser kann jedoch auch über die Länge des Ringraumes 9 variieren. Bei diesem Ausführungsbeispiel ist keine Bohrung für eine zusätzliche Zündkerze dargestellt. Figur 1B zeigt den Hohlraum 8, der in den Ringraum 9 mündet. Auch hier erfolgt die Bildung des Hohlleiterringraumes durch Auflegen eines Ringes 17 gemäß Figur 5 oder 17' gemäß Figur 6. In den Figuren C und D ist sind die in den Figuren 3A und 3B gezeigten Elemente soweit ersichtlich im jeweiligen Querschnitt dargestellt.

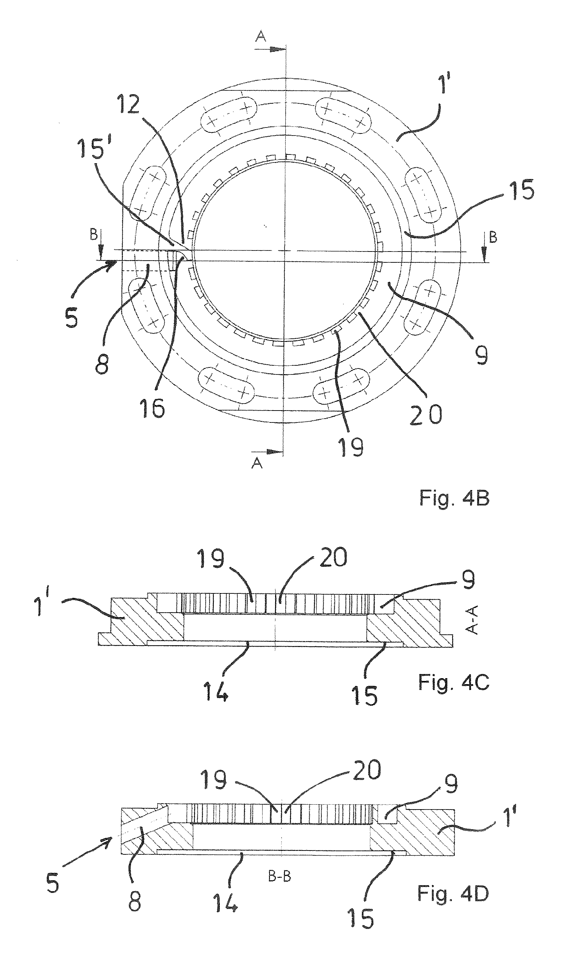

Figur 4 zeigt ein Zylinderkopfgegenstück 1' das im Wesentlichen entsprechend dem Zylinderkopf 1 in Figur 3 aufgebaut ist, mit dem Unterschied, dass das Gegenstück als Ring mit einer Durchtrittsöffnung 21 für die Vergrößerung des Brennraumes 2 sowie den Durchtritt eines in dieser Figur nicht dargestellten Kolbens eines Hubkolben-Verbrennungsmotors. Der Ringraum ist hier mit 9' bezeichnet. Dieses Zylinderkopfgegenstück 1' kann umgekehrt, d. h. derart, dass die Einzelstege 19 einander zugewandt sind, an den Zylinderkopf 1 gemäß Figur 3 befestigt werden, wobei in der Ausnehmung 14 gemäß Figur 3C und 3D der Ring 17 oder 17' gemäß den Figuren 5 und 6 als Trennung eingelegt werden kann. Durch den jeweiligen Ring 17 bzw. 17' wird sowohl im Zylinderkopf 1 als auch im Zylinderkopfgegenstück ein Hohlleiterringraum gebildet. Der jeweilige Ring 17 bzw. 17' liegt in der Ausnehmung 14 und auf dem Absatz 15 auf. Diese Ausnehmung fehlt bei dem Zylinderkopfgegenstück 1'.

Figur 5 zeigt einen Zylinderkopf 1 gemäß Figur 2 mit einem wandbildenden Steg 10, dessen Höhe über die Länge des Ringraums 9 abnimmt. Mit einem eingelegten flächigen Ring 17 durch den ein Hohlleiterringraum 9' gebildet wird.

Figur 6 zeigt die Ausbildung eines Ringes 17' mit Zündspitzen 22, die in Richtung Mittelpunkt des Ringes weisen und dazu dienen, lokale Felderhöhungen zu erzeugen.

Figur 7 zeigt den Zusammenbau eines Zylinderkopfes 1 mit einem Zylinderkopfgegenstück 1' gemäß den Figuren 3 und 4 mit Einzelstegen 19 und Ring 17 gemäß Figur 5 zur Trennung der jeweiligen Hohlleiterringräume 9, 9' in dem Zylinderkopf 1 bzw. Zylinderkopfgegenstück 1'. An dem Zylinderkopf 1 und dem Zylinderkopfgegenstück 1' sind jeweils Mikrowellenzuführungen 7 dargestellt, die vor dem Eintritt in die Öffnung 5 für den Hohlraum 8 ein Mikrowellenfenster 6 aufweisen. In dem Ausführungsbeispiel sind der Zylinderkopf 1 und das Zylinderkopfgegenstück 1' so aufeinander angeordnet, dass die Mikrowellenzuführungen 7 genau gegenüberliegend angeordnet sind. Selbstverständlich ist es möglich, hier durch Verdrehen eine andere Anordnung zu wählen, je nach dem, was für den jeweiligen Anwendungsfall benötigt wird.

Figur 8 zeigt schematisch einen Ausschnitt eines Hubkolben-Verbrennungsmotors 25 mit einem Zylinder 23 in dem ein Kolben 24 bewegbar ist, mit einem Zylinderkopf 1 in dem für eine MW-Ringeinkopplung ein Ringraum 9 mit Einzelstegen 19 entsprechend Figur 3 angeordnet ist. Die Figur zeigt auch die in Figur 7 dargestellte Mikrowellenzuführung 7 mit Mikrowellenfenster 6.

Wie bereits vorstehend erwähnt, können einzelne Merkmale in den jeweiligen Ausführungsbeispielen mit anderen Merkmalen eines anderen Ausführungsbeispiels kombiniert werden, wenn diese zweckmäßig ist. Wie aus den Figuren ersichtlich ist der Zylinderkopf 1 ein technisch einfach herstellbares Teil, wobei der Hohlleiterringraum 9 durch Einlegen eines entsprechenden Ringes 17 oder 17' gebildet wird. Der jeweilige Ring 17 oder 17' dient als Trennwand für ein Zylinderkopfgegenstück 1'.

Die Zylinderköpfe 1 sind aus einem dafür geläufig verwendeten Material, üblicherweise Metall, wobei das Material entsprechend dem Einsatz ausgewählt werden kann. Die Begrenzung für die Mikrowellen in den dargestellten Hohlleiterringräumen ist selbstverständlich metallisch, wobei auch zusätzlich noch Maßnahmen getroffen werden können, um die Leitfähigkeit zu optimieren, beispielsweise durch Oberflächenbeschichtung mit einem hoch elektrisch leitfähigen Material.

**Patentansprüche**

1. Verfahren zum Einbringen von Mikrowellenenergie in einen Brennraum (2) eines Verbrennungsmotors bei dem die Mikrowellen über ein Mikrowellenfenster (6) in den Brennraum (2) gelangen, **dadurch gekennzeichnet, dass** die Mikrowellen nach dem Durchtritt durch das Mikrowellenfenster (6) am Umfang des Brennraumes (2) geführt und radial in den Brennraum (2) eingekoppelt werden.

2. Verfahren nach Anspruch 1, **dadurch gekennzeichnet, dass** die Mikrowellen über mindestens einen am Umfang des Brennraumes (2) angeordneten Hohlleiterringraum (9) mit mindestens einer zu dem Brennraum (2) gerichteten Austrittsöffnung (14, 15') in den Brennraum (2) eingeleitet werden.

3. Verfahren nach Anspruch 2, **dadurch gekenn-** **zeichnet, dass** die Mikrowellen am Ende des Hohlleiterringraumes (9) unter einem Winkel in den Brennraum (2) geleitet werden.

4. Verfahren nach Anspruch 2 oder 3, **dadurch gekennzeichnet, dass** die Mikrowellen von dem Hohlleiterringraum (9) durch einen zwischen Hohlleiterringraum (9) und Brennraum (2) umlaufenden Spalt (15'), durch einen zwischen Hohlleiterringraum (9) und Brennraum (2) umlaufenden, sich mit der Länge des Weges der Mikrowelle im Hohlleiterringraum (9) vergrößernden Spalt oder über eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraum (2) angeordnete Spalte (20) oder einer Kombination daraus eingeleitet werden.

5. Verfahren nach einem der vorangegangenen Ansprüche, **dadurch gekennzeichnet, dass** die Mikrowellen mit einer Frequenz von 25 GHz bis 90 GHz, vorzugsweise 36 GHz, eingeleitet werden.

6. Verfahren nach einem der vorangegangenen Ansprüche, **dadurch gekennzeichnet, dass** die Mikrowellen in Impulspaketen eingeleitet werden, wobei vorzugsweise die Impulspakete auch nach einer bereits erfolgten Zündung eines Kraftstoff-Luft-Gemisches aufrecht erhalten werden.

7. Verfahren nach einem der vorangegangenen Ansprüche, **dadurch gekennzeichnet, dass** die Mikrowellen bezüglich einer Kurbelwelle winkelgradgesteuert eingeleitet werden.

8. Verfahren nach einem der vorangegangenen Ansprüche **dadurch gekennzeichnet, dass** die Mikrowellen bei einem Hubkolben-Verbrennungsmotor (25) mit wenigstens einem Zylinder (23) mit Zylinderkopf (1) und Brennraum (2) über einen im Zylinderkopf (1) angeordneten Hohlleiterringraum (9) eingeleitet werden.

9. Vorrichtung zum Einbringen von Mikrowellenenergie in einen Brennraum (2) eines Hubkolben-Verbrennungsmotors (25) mit wenigstens einem Zylinder (23) mit Zylinderkopf (1) und Brennraum (2) bei dem die Mikrowellen über ein Mikrowellenfenster (6) in den Brennraum (2) gelangen, **dadurch gekennzeichnet, dass** in dem Zylinderkopf (1) mindestens ein um den Brennraum (2) am Umfang verlaufender Hohlleiterringraum (9) mit mindestens einer Zuführung für die Mikrowelle und mit mindestens einer zwischen Hohlleiterringraum (9) und Brennraum (2) angeordneten Austrittsöffnung (14, 15') für die Mikrowelle angeordnet ist.

10. Vorrichtung nach Anspruch 9, **dadurch gekennzeichnet, dass** am Ende des Hohlleiterringraumes (9) eine unter einem Winkel zu dem Hohlleiterringraum (9) angeordnete Wand (12) und eine Austrittsöffnung (14) in Richtung Brennraum (2) angeordnet ist.

11. Vorrichtung nach einem der Ansprüche 9 oder 10, **dadurch gekennzeichnet, dass** zwischen Hohlleiterringraum (9) und Brennraum (2) ein umlaufender Spalt, ein zwischen Hohlleiterringraum (9) und Brennraum (2) umlaufenden, sich mit der Länge des Weges der Mikrowelle im Hohlleiterringraum (9) vergrößernder Spalt oder eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraum (2) angeordnete Spalte oder einer Kombination daraus angeordnet ist.

12. Vorrichtung nach einem der Ansprüche 9 bis 11, **dadurch gekennzeichnet, dass** der Hohlleiterringraum (9) als ein um den Brennraum (2) verlaufender Kanal mit einem auf dem Kanal auflegbaren Ring (17, 17'), vorzugsweise mit in den Brennraum (2) hineinragende Spitzen (22), ausgebildet ist.

13. Vorrichtung nach einem der Ansprüche 9 bis 12, **dadurch gekennzeichnet, dass** ein weiterer, vorzugsweise identischer, Hohlleiterringraum (9') im Anschluss an den anderen Hohlleiterringraum (9) vorgesehen ist, der vorzugsweise mit den Austrittsöffnungen (20) gegenüber den Austrittsöffnungen (20') des anderen Hohlleiterringraums (9) versetzt angeordnet ist.

14. Vorrichtung nach Anspruch 13, **dadurch gekennzeichnet, dass** der weitere Hohlleiterringraum (9') in einem ringförmigen Werkstück (1') angeordnet ist, das im Anschluss an den anderen Hohlleiterringraum (9) mit seinem Hohlleiterringraum (9') entgegengesetzt angeordnet ist, wobei ein zwischen Werkstück (1') und dem anderen Hohlleiterringraum (9) ein ringförmiges flächiger Ring (17), vorzugsweise mit in den Brennraum (2) hineinragende Spitzen (22), angeordnet ist, der eine Trennwand zwischen den Hohlleiterringräumen (9, 9') bildet und gleichzeitig bei beiden Hohlleiterringräumen (9, 9') eine Wand bildet.

15. Verbrennungsmotor (23) mit einer Vorrichtung zum Einbringen von Mikrowellenenergie nach einem der vorangegangen Ansprüche 9 bis 14.

**Geänderte Patentansprüche gemäss Regel 137(2) EPÜ.**

1. Verfahren zum Einbringen von Mikrowellenenergie in einen Brennraum (2) eines Hubkolben-Verbrennungsmotors (25) mit wenigstens einem Zylinder (23) mit einem Zylinderkopf (1) bei dem die Mikrowellen über ein Mikrowellenfenster (6) in den Brennraum (2) gelangen, **dadurch gekennzeichnet, dass** die Mikrowellen nach dem Durchtritt durch das Mikrowellenfenster (6) am Umfang des Brennraumes (2) über ein im Zylinderkopf (1) angeordneten Hohlleiterringraum (9) geführt und radial in den Brennraum (2) eingekoppelt werden, wobei das Mikrowellenfenster (6) den Brennraum (2) von einer extern an dem Zylinderkopf (1) angebrachter Mikrowellenzuführung (7) abdichtet und aus einem festen, für Mikrowellen durchlässigen Werkstoff besteht, und der Hohlleiterringraum (9) als ein in dem Zylinderkopf (1) angeordneter, um den Brennraum (2) verlaufender Kanal ausgebildet ist.

2. Verfahren nach Anspruch 1, **dadurch gekennzeichnet, dass** die Mikrowellen über den mindestens einen Hohlleiterringraum (9), der durch einen um den Brennraum (2) umlaufenden Steg (10) von dem Brennraum (2) abgegrenzt wird, mit mindestens einer zu dem Brennraum (2) gerichteten Austrittsöffnung (14, 15') in den Brennraum (2) eingeleitet werden.

3. Verfahren nach Anspruch 2, **dadurch gekennzeichnet, dass** die Mikrowellen am Ende des Hohlleiterringraumes (9) unter einem Winkel in den Brennraum (2) geleitet werden.

4. Verfahren nach Anspruch 2 oder 3, **dadurch gekennzeichnet, dass** die Mikrowellen von dem Hohlleiterringraum (9) durch einen zwischen Hohlleiterringraum (9) und Brennraum (2) umlaufenden Spalt (18), durch einen zwischen Hohlleiterringraum (9) und Brennraum (2) umlaufenden, sich mit der Länge des Weges der Mikrowelle im Hohlleiterringraum (9) vergrößernden Spalt (18) oder über eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraum (2) angeordnete Spalte (20) oder einer Kombination daraus eingeleitet werden.

5. Verfahren nach einem der vorangegangenen Ansprüche, **dadurch gekennzeichnet, dass** die Mikrowellen mit einer Frequenz von 25 GHz bis 90 GHz, vorzugsweise 36 GHz, eingeleitet werden.

6. Verfahren nach einem der vorangegangenen Ansprüche, **dadurch gekennzeichnet, dass** die Mikrowellen in Impulspaketen eingeleitet werden, wobei vorzugsweise die Impulspakete auch nach einer bereits erfolgten Zündung eines Kraftstoff-Luft-Gemisches aufrecht erhalten werden.

7. Verfahren nach einem der vorangegangenen Ansprüche, **dadurch gekennzeichnet, dass** die Mikrowellen bezüglich einer Kurbelwelle winkelgradgesteuert eingeleitet werden.

8. Vorrichtung zum Einbringen von Mikrowellenenergie in einen Brennraum (2) eines Hubkolben-Verbrennungsmotors (25) mit wenigstens einem Zylinder (23) mit Zylinderkopf (1) und Brennraum (2) bei dem die Mikrowellen über ein Mikrowellenfenster (6) in den Brennraum (2) gelangen, **dadurch gekennzeichnet, dass** in dem Zylinderkopf (1) mindestens ein um den Brennraum (2) am Umfang verlaufender Hohlleiterringraum (9) mit mindestens einer Zuführung (7) für die Mikrowelle und mit mindestens einer zwischen Hohlleiterringraum (9) und Brennraum (2) angeordneten Austrittsöffnung (14, 15') für die Mikrowelle angeordnet ist, wobei
das Mikrowellenfenster (6) den Brennraum (2) von einer Mikrowellenzuführung (7) abdichtet und aus einem festen, für Mikrowellen durchlässigen Werkstoff besteht, und
der Hohlleiterringraum (9) als ein in dem Zylinderkopf (1) integrierter, um den Brennraum (2) verlaufender Kanal ausgebildet ist.

9. Vorrichtung nach Anspruch 8, **dadurch gekennzeichnet, dass** am Ende des Hohlleiterringraumes (9), der durch den um den Brennraum (2) umlaufenden Steg (10) von dem Brennraum (2) abgegrenzt ist, eine unter einem Winkel zu dem Hohlleiterringraum (9) angeordnete Wand (12) und eine Austrittsöffnung (14) in Richtung Brennraum (2) angeordnet ist.

10. Vorrichtung nach einem der Ansprüche 8 oder 9, **dadurch gekennzeichnet, dass** zwischen Hohlleiterringraum (9) und Brennraum (2) ein umlaufender Spalt (18), ein zwischen Hohlleiterringraum (9) und Brennraum (2) umlaufenden, sich mit der Länge des Weges der Mikrowelle im Hohlleiterringraum (9) vergrößernder Spalt (18) oder eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraum (2) angeordnete Spalte (20) oder einer Kombination daraus angeordnet ist.

11. Vorrichtung nach einem der Ansprüche 8 bis 10, **dadurch gekennzeichnet, dass** der Hohlleiterringraum (9) als ein um den Brennraum (2) verlaufender Kanal mit einem auf dem Kanal auflegbaren Ring (17, 17'), vorzugsweise mit in den Brennraum (2) hineinragenden Spitzen (22), ausgebildet ist.

12. Vorrichtung nach einem der Ansprüche 8 bis 11, **dadurch gekennzeichnet, dass** ein weiterer, vorzugsweise identischer, Hohlleiterringraum (9') im Anschluss an den anderen Hohlleiterringraum (9) vorgesehen ist, der vorzugsweise mit den Austrittsöffnungen (20) gegenüber den Austrittsöffnungen (20') des anderen Hohlleiterringraums (9) versetzt angeordnet ist.

13. Vorrichtung nach Anspruch 12, **dadurch gekennzeichnet, dass** der weitere Hohlleiterringraum (9') in einem ringförmigen Werkstück (1') angeordnet ist, das im Anschluss an den anderen Hohlleiterringraum (9) mit seinem Hohlleiterringraum (9') entgegengesetzt angeordnet ist, wobei ein zwischen Werkstück (1') und dem anderen Hohlleiterringraum (9) ein ringförmiges flächiger Ring (17), vorzugsweise mit in den Brennraum (2) hineinragende Spitzen (22), angeordnet ist, der eine Trennwand zwischen den Hohlleiterringräumen (9, 9') bildet und gleichzeitig bei beiden Hohlleiterringräumen (9, 9') eine Wand bildet.

14. Verbrennungsmotor (23) mit einer Vorrichtung zum Einbringen von Mikrowellenenergie nach einem der vorangegangen Ansprüche 8 bis 13.

Fig. 1A

Fig. 1B

Fig. 1C

Fig. 2A

Fig. 2B

Fig. 2C

Fig. 3A

Fig. 3B

A-A

3

1

2  14  19  15  Fig. 3C

2  3

5

1

8  19  B-B  20

Fig. 3D

1'  9

20

15'

19

8

5

9  13

Fig. 4A

Fig. 4B

Fig. 4C

A-A

B-B

Fig. 4D

Fig. 5A

Fig. 5B

Fig. 5C

Fig. 6A

Fig. 6B

Fig. 7A

Fig. 7B

Fig. 7C

Fig. 7D

Fig. 8

Europäisches Patentamt
European Patent Office
Office européen des brevets

# EUROPÄISCHER RECHERCHENBERICHT

Nummer der Anmeldung

EP 15 15 7321

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 065 592 A1 (IMAGINEERING INC [JP]) 3. Juni 2009 (2009-06-03) * Absatz [0159]; Abbildungen 8,10 * ----- | 1-11, 13-15 | INV. F02P23/04 |
| X | US 4 561 406 A (WARD MICHAEL A V [US]) 31. Dezember 1985 (1985-12-31) * Spalte 4, Absatz 63 - Spalte 5, Absatz 4; Abbildungen * ----- | 1-3, 5-10, 13-15 | |
| A | US 2011/030660 A1 (IKEDA YUJI [JP]) 10. Februar 2011 (2011-02-10) * Abbildungen * ----- | 1-15 | |
| A | EP 2 687 714 A2 (IMAGINEERING INC [JP]) 22. Januar 2014 (2014-01-22) * Abbildungen * ----- | 1-15 | |
| X | DE 10 2011 116340 A1 (BRUEMMER HEINZ [DE]) 25. April 2013 (2013-04-25) * Seite 2/5; Abbildungen * ----- | 1-15 | |

RECHERCHIERTE SACHGEBIETE (IPC)

F02P

Der vorliegende Recherchenbericht wurde für alle Patentansprüche erstellt

| Recherchenort | Abschlußdatum der Recherche | Prüfer |
|---|---|---|
| München | 16. September 2015 | Ulivieri, Enrico |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 7321

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2015

| Im Recherchenbericht angeführtes Patentdokument | Datum der Veröffentlichung | Mitglied(er) der Patentfamilie | Datum der Veröffentlichung |
|---|---|---|---|
| EP 2065592 A1 | 03-06-2009 | AU 2006348506 A1 | 27-03-2008 |
| | | BR PI0619662 A2 | 11-10-2011 |
| | | CA 2625789 A1 | 27-03-2008 |
| | | CA 2828176 A1 | 27-03-2008 |
| | | CA 2828290 A1 | 27-03-2008 |
| | | CN 101351638 A | 21-01-2009 |
| | | CN 102836620 A | 26-12-2012 |
| | | CN 104763572 A | 08-07-2015 |
| | | EP 2065592 A1 | 03-06-2009 |
| | | KR 20090055515 A | 02-06-2009 |
| | | KR 20130019015 A | 25-02-2013 |
| | | US 2009229581 A1 | 17-09-2009 |
| | | US 2012012077 A1 | 19-01-2012 |
| | | US 2012013254 A1 | 19-01-2012 |
| | | US 2012293071 A1 | 22-11-2012 |
| | | US 2013336849 A1 | 19-12-2013 |
| | | WO 2008035448 A1 | 27-03-2008 |
| US 4561406 A | 31-12-1985 | KEINE | |
| US 2011030660 A1 | 10-02-2011 | CN 101970829 A | 09-02-2011 |
| | | JP 5374691 B2 | 25-12-2013 |
| | | JP 2009221947 A | 01-10-2009 |
| | | KR 20100128327 A | 07-12-2010 |
| | | US 2011030660 A1 | 10-02-2011 |
| | | WO 2009113692 A1 | 17-09-2009 |
| EP 2687714 A2 | 22-01-2014 | EP 2687714 A2 | 22-01-2014 |
| | | US 2014299085 A1 | 09-10-2014 |
| | | WO 2012124671 A2 | 20-09-2012 |
| DE 102011116340 A1 | 25-04-2013 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

**In der Beschreibung aufgeführte Patentdokumente**

- DE 10356916 A1
- EP 15157298 A